# EUROPEAN PATENT APPLICATION

(11) **EP 3 860 177 A1**
(43) Date of publication of application: **04.08.2021**
(21) Application number: 18934889.9
(22) Date of filing: 28.09.2018
(51) Int. Cl.: H04W 8/22

(54) **USER EQUIPMENT**

(71) Applicant: NTT DoCoMo, Inc., Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/036481
(87) International publication number: WO 2020/065978

(57) **Abstract**

A user terminal according to one aspect of the present disclosure includes a transmitting section that transmits information indicating a third processing capability, the third processing capability supporting at least one of a value that satisfies a requirement stricter than at least one of first and second processing capabilities, and a function that is not supported by the first and second processing capabilities, and a control section that controls certain processing based on the third processing capability.

## Description

### Technical Field

The present disclosure relates to a user terminal in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency and so on (see Non-Patent Literature 1). For the purpose of further high capacity, advancement of LTE (3GPP Release (Rel.) 8, Rel. 9), and so on, the specifications of LTE-A (LTE-Advanced, 3GPP Rel. 10, Rel. 11, Rel. 12, Rel. 13, and Rel. 14) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems, a user terminal controls transmission of an uplink shared channel (for example, PUSCH (Physical Uplink Shared Channel)) based on downlink control information (DCI) (UL grant). The user terminal also controls transmission of an uplink control channel (for example, PUCCH (Physical Uplink Control Channel)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In NR (for example, Rel. 15), first and second processing capability (processing capalility) #1 and #2 are defined as information indicating capability (also referred to as "processing capability," "UE processing capability," and so on) relating to a processing time of a UE.

For NR (for example, Rel. 16), a study is underway to enhance communication of a second traffic type (for example, URLLC) in which a requirement for at least one of reliability and delay is stricter than that of a first traffic type (for example, eMBB).

However, the requirement of the second traffic type that is enhanced in Rel. 16 or later version may not be satisfied even if operation is performed in accordance with a value indicated by the processing capability #1 or #2.

Thus, an object of the present disclosure is to provide a user terminal that appropriately operates based on a third processing capability that is at least one of enhanced first processing capability and enhanced second processing capability. Solution to Problem

A user terminal according to one aspect of the present disclosure includes a transmitting section that transmits information indicating a third processing capability, the third processing capability supporting at least one of a value that satisfies a requirement stricter than at least one of first and second processing capabilities, and a function that is not supported by the first and second processing capabilities, and a control section that controls certain processing based on the third processing capability.

### Advantageous Effects of Invention

One aspect of the present disclosure enables appropriate operation based on the third processing capability that is at least one of enhanced first processing capability and enhanced second processing capability.

### Brief Description of Drawings

FIGS. 1A and 1B are diagrams to show examples of a PDSCH processing time;
FIGS. 2A and 2B are diagrams to show examples of a PUSCH processing time;
FIGS. 3A and 3B are diagrams to show examples of a CSI computation time;
FIGS. 4A and 4B are diagrams to show examples of the numbers of BD/CCEs of a PDCCH per slot and per cell;
FIGS. 5A and 5B are diagrams to show examples of out-of-order HARQ;
FIGS. 6A and 6B are diagrams to show examples of out-of-order scheduling;
FIG. 7 is a diagram to show an example of a schematic structure of a radio communication system according to one embodiment;
FIG. 8 is a diagram to show an example of a structure of a base station according to one embodiment;
FIG. 9 is a diagram to show an example of a structure of a user terminal according to one embodiment; and
FIG. 10 is a diagram to show an example of a hardware structure of the base station and the user terminal according to one embodiment.

### Description of Embodiments

In NR (for example, Rel. 15), two processing capabilities #1 and #2 are defined as information indicating capability (processing capability) relating to a processing time of a UE.

The processing capability #1 is a baseline capability, and the processing capability #2 is more aggressive than the processing capability #1. A UE operates based on processing capability of the UE (for example, processing capability #1 or #2) .

For example, the processing capabilities #1 and #2 may indicate a value of at least one of the following parameters. The value of at least one of the following parameters may differ between the processing capabilities #1 and #2 (the value indicated by the processing capability #2 may be configured to a value of a requirement stricter than a value indicated by the processing capability #1) .
- Time (PDSCH processing time) required to process a downlink shared channel (for example, PDSCH (Physical Downlink Shared Channel))
- Time (PUSCH preparation time) required to prepare an uplink shared channel (for example, PUSCH (Physical Uplink Shared Channel))
- Time (CSI computation time) required to compute channel state information (CSI)
- At least one of the number of times of blind decoding and the number of times of control channel elements (CCEs), of a downlink shared channel (for example, PDCCH (Physical Downlink Control Channel)) per slot (or per slot and per cell), (number of BD/CCEs of a PDCCH)
- Numbers of schedulable PDSCHs and PUSCHs per slot (or per slot and per cell)
- Number of pieces of DCI for scheduling a PDSCH and a PUSCH, which are storable per cell by a UE

Here, the PDSCH processing time may be, for example, a time from reception of a PDSCH to transmission of transmission confirmation information (HARQ-ACK (Hybrid Automatic Repeat reQuest-ACKnowledge), ACK/NACK (ACKnowledge/Non-ACK)) with respect to the PDSCH. The PDSCH processing time may be referred to as a "PDSCH decoding time," an "N₁," and so on.

The PUSCH preparation time may be, for example, a time from reception of DCI (also referred to as "UL grant," "DCI format 0_0," "DCI format 0_1," and so on) to transmission of a PUSCH scheduled by the DCI. The PDSCH processing time may be referred to as an "N₂" and so on.

The CSI computation time may be, for example, a time from reception of DCI for triggering CSI reporting to transmission of CSI reporting by a PUSCH that is scheduled by the DCI. The CSI computation time may be referred to as a "CSI computation delay requirement," a "Z₁," and so on.

In NR, it is assumed that a UE performs a plurality of communications (a plurality of communications of different traffic types) relating to a plurality of services (for example, URLLC (Ultra Reliable and Low Latency Communications), eMBB (enhanced Mobile Broad Band), and the like) having different requirements.

For NR (for example, Rel. 16), a study is underway to enhance communication of a second traffic type (for example, URLLC) in which a requirement for at least one of reliability and delay is stricter than that of a first traffic type (for example, eMBB).

However, the requirement of the second traffic type that is enhanced in Rel. 16 or later version may not be satisfied even if operation is performed in accordance with a value indicated by the processing capability #1 or #2.

In consideration of them, the inventors of the present invention came up with the idea of supporting a processing capability that satisfies at least one of the following two conditions, whereby the requirement (for example, requirement enhanced in Rel. 16) of the second traffic type is appropriately satisfied. One of the two conditions is a condition that a certain parameter indicates a value more aggressive than that of at least one of the processing capabilities #1 and #2. The other is a condition that an additional function is included.

One embodiment of the present disclosure will be described in detail with reference to the drawings as follows. Note that the first to the third aspects may be used alone or at least two of these aspects may be used in combination.

### (First Aspect)

The first aspect describes a processing capability #3 (third processing capability) that supports a value satisfying a requirement stricter than at least one of the processing capabilities #1 and #2. A certain parameter that is defined in the processing capability #3 may be configured to a value more aggressive than that of at least one of the processing capabilities #1 and #2.

For the processing capability #3, a value of at least one of the following parameters may be defined.
- PDSCH processing time shorter than that of at least one of the processing capabilities #1 and #2
- PUSCH processing time shorter than that of at least one of the processing capabilities #1 and #2
- CSI computation time shorter than that of at least one of the processing capabilities #1 and #2
- Numbers of BD/CCEs of a PDCCH per slot (or per slot and per cell)
- At least one of the numbers of schedulable PDSCHs and PUSCHs per slot (or per slot and per cell)
- Number of pieces of DCI for scheduling at least one of a PDSCH and a PUSCH, which are storable per cell by a UE

### <PDSCH Processing Time Indicated by Processing Capability #3>

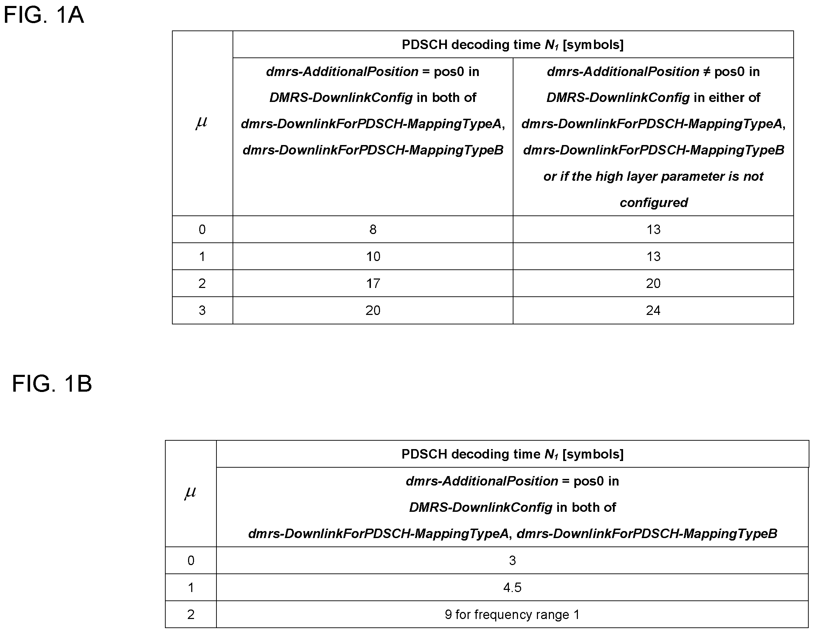

FIGS. 1A and 1B are diagrams to show examples of a PDSCH processing time (PDSCH decoding time). FIG. 1A shows an example of a PDSCH processing time of the processing capability #1. FIG.1B shows an example of a PDSCH processing time of the processing capability #2.

For example, the PDSCH processing time indicated by the processing capability #3 may be shorter than at least one of the PDSCH processing time indicated by the processing capability #1 shown in FIG. 1A and the PDSCH processing time indicated by the processing capability #2 shown in FIG. 1B.

The PDSCH processing time indicated by the processing capability #3 may be a value that differs with respect to at least one of a subcarrier spacing (µ), an additional position (dmrs-AdditionalPosition) of a PDSCH demodulation reference signal (DMRS), a mapping type (mapping type A or B) of a PDSCH DMRS, and a frequency range (FR).

Here, the values of µ = 0, 1, 2, and 3 in FIGS.1A and 1B may correspond to subcarrier spacings 15, 30, 60, and 120 kHz, respectively. For example, FR1 may be a frequency band of 6 GHz or less, and FR2 may be a frequency band of higher than 24 GHz.

Note that the PDSCH processing time indicated by the processing capability #2 is supported in a case that the bandwidth of the PDSCH is equal to or less than (or less than) a certain threshold (for example, 136 resource blocks (physical resource blocks (PRBs)). On the other hand, the PDSCH processing time indicated by the processing capability #3 may also be supported in a case that the bandwidth of the PDSCH is greater than (or equal to or greater than) the certain threshold.

### <PUSCH Processing Time Indicated by Processing Capability #3>

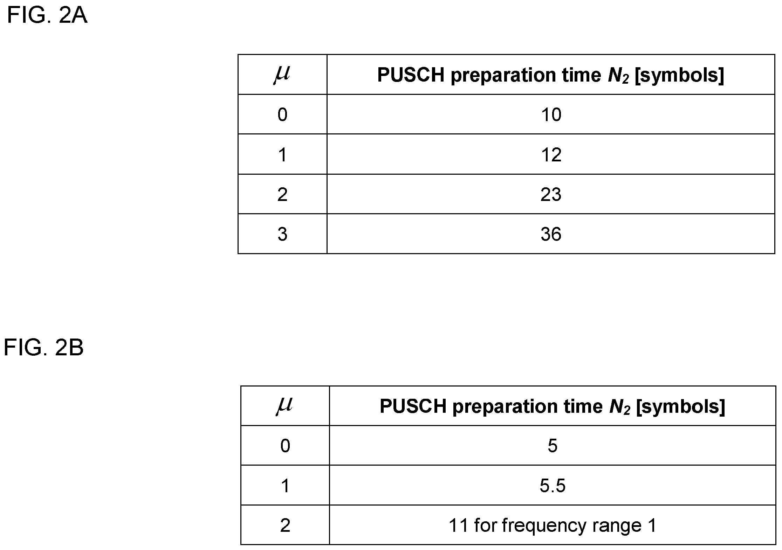

FIGS. 2A and 2B are diagrams to show examples of a PUSCH processing time. FIG. 2A shows an example of a PUSCH processing time of the processing capability #1. FIG. 2B shows an example of a PUSCH processing time of the processing capability #2.

For example, the PUSCH processing time indicated by the processing capability #3 may be shorter than at least one of the PUSCH processing time indicated by the processing capability #1 shown in FIG. 2A and the PUSCH processing time indicated by the processing capability #2 shown in FIG. 2B.

The PUSCH processing time indicated by the processing capability #2 may differ with respect to each of subcarrier spacings (p) .

### <CSI Computation Time Indicated by Processing Capability #3>

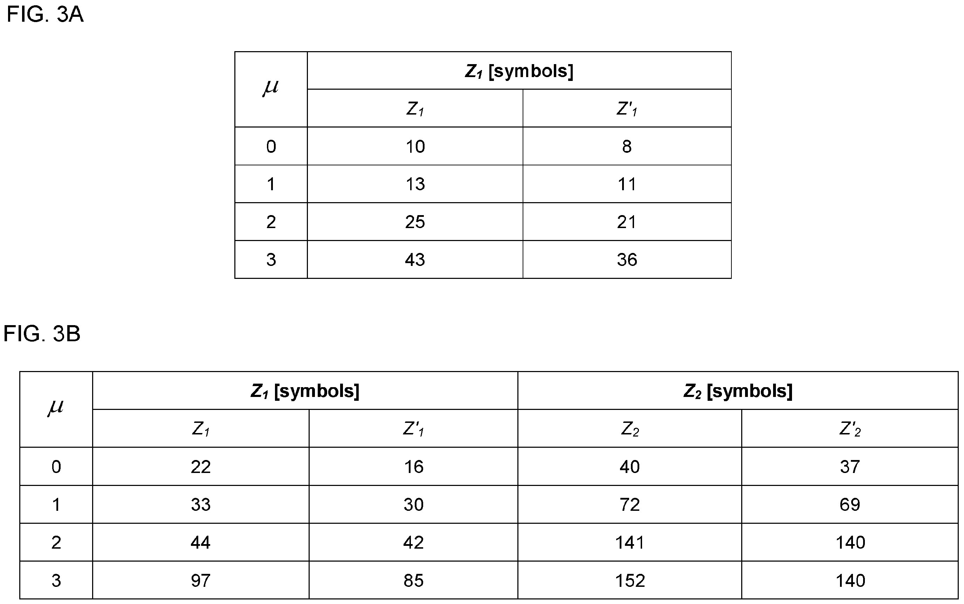

FIGS. 3A and 3B are diagrams to show examples of a CSI computation time (CSI computation delay requirement). FIG. 3A shows an example of a CSI computation time of the processing capability #1. FIG.3B shows an example of a CSI computation time of the processing capability #2.

For example, the CSI computation time indicated by the processing capability #3 may be shorter than at least one of the CSI computation time indicated by the processing capability #1 shown in FIG. 3A and the CSI computation time indicated by the processing capability #2 shown in FIG. 3B.

The CSI computation time indicated by the processing capability #3 may differ with respect to at least one of a subcarrier spacing (µ) , Z₁, Z'₁, Z₂, and Z'₂. Here, Z₁ indicates a processing time from reception of DCI for triggering CSI reporting to transmission of a PUSCH including the CSI report. Z'₁ indicates a processing time from reception of a channel state information reference signal (CSI-RS (Channel State Information-Reference Signal)) to transmission of a PUSCH including a CSI report based on the CSI-RS. Z₂ indicates a processing time from reception of DCI for triggering CSI reporting to transmission of a PUSCH including the CSI report. Z'₂ indicates a processing time from reception of CSI-RS to transmission of a PUSCH including a CSI report based on the CSI-RS. Of the processing times (Z₁, Z'₁) and (Z₂, Z'₂), (Z₁, Z'₁) is applied in a case that, at least, the codebook type of CSI to be reported is type 1 single panel and/or a report quantity (reportQuantity) of CSI is a certain quantity (for example, cri-RI-CQI).

### <Numbers of BD/CCEs of PDCCH Indicated by Processing Capability #3>

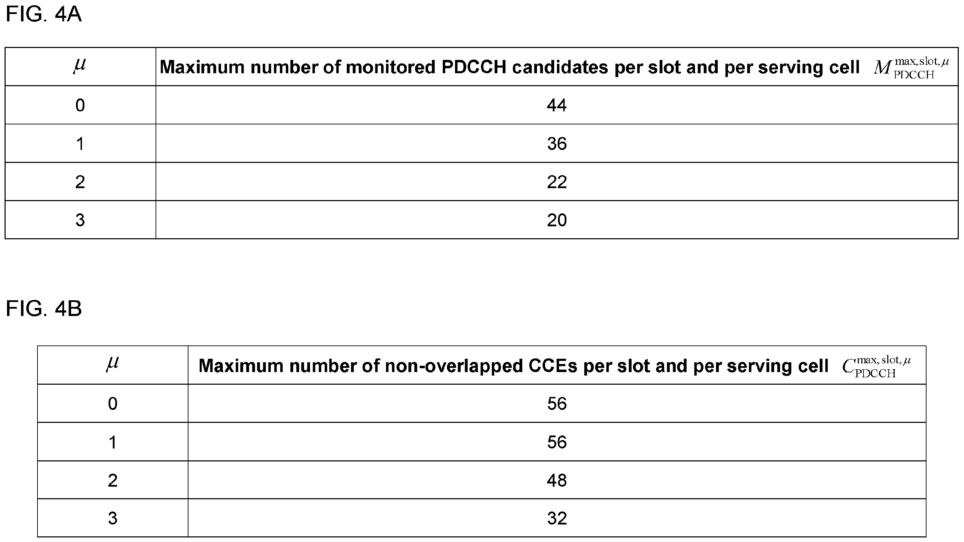

FIGS. 4A and 4B are diagrams to show examples of the numbers of BD/CCEs of a PDCCH per slot (or per slot and per cell). FIG. 4A shows an example of the maximum number of BD (monitored PDCCH candidates) per slot and per cell (also referred to as a "serving cell," a "component carrier," a "carrier," and so on). FIG. 4B shows the maximum number of non-overlapped CCEs per slot and per cell.

The number (for example, the maximum number) of BD per slot (or per slot and per cell) indicated by the processing capability #3 may be greater than the number of BD shown in FIG. 4A. The number of BD indicated by the processing capability #3 may differ with respect to each of subcarrier spacings (µ).

The maximum number of CCEs per slot (or per slot and per cell) indicated by the processing capability #3 may be greater than the number of CCEs shown in FIG. 4B. The maximum number of CCEs indicated by the processing capability #3 may differ with respect to each of subcarrier spacings (µ).

### <Numbers of At Least One of Schedulable PDSCHs and PUSCHs>

Each of the numbers of schedulable PDSCHs and PUSCHs per slot (or per slot and per cell) may be, for example, 1, 2, 4, or 7, in the processing capabilities #1 and #2.

The number of at least one of schedulable PDSCHs and PUSCHs per slot (or per slot and per cell) indicated by the processing capability #3 may be a fixed value (for example, 4) or may be configured from among a plurality of values (for example, 1, 2, 4, and 7).

### <Number of Pieces of DCI That Are Storable per Cell by UE>

The number of pieces of DCI for scheduling at least one of a PDSCH and a PUSCH, which are storable per cell by a UE, may be, for example, 16 at the maximum, in the processing capabilities #1 and #2.

The number of pieces of DCI for scheduling at least one of a PDSCH and a PUSCH, which are storable per cell by a UE, indicated by the processing capability #3 may be a fixed value (for example, 16) or may be configured from among a plurality of values (that may include a value greater than 16).

The first aspect described above achieves the processing capability #3 (third processing capability) that supports a value satisfying a requirement stricter than at least one of the processing capabilities #1 and #2.

### (Second Aspect)

The second aspect describes a processing capability #3 (third processing capability) that supports a function not supported by the processing capabilities #1 and #2.

For example, out-of-order HARQ is not supported by the processing capabilities #1 and #2. Here, in a case that a PDSCH is received at a slot #i, and HARQ-ACK for the PDSCH is transmitted at a slot #j, the out-of-order HARQ is to receive other PDSCH at a slot after the slot #i and to transmit HARQ-ACK for the other PDSCH at a slot before the slot #j.

Out-of-order scheduling is not supported by the processing capabilities #1 and #2. Here, in a case that a PDCCH (DCI) is received at a slot (or symbol) #i, and a PUSCH that is scheduled by the PDCCH is transmitted at a slot (or symbol) #j, the out-of-order scheduling is to receive other PDCCH at a slot (or symbol) after the slot #i and to transmit a PUSCH for the other PDCCH at a slot (or symbol) before the slot #j. The out-of-order scheduling may be referred to as "out-of-order PUSCH," and so on.

On the other hand, the processing capability #3 is desired to support the out-of-order HARQ and the out-of-order scheduling, in order to satisfy the requirement of the enhanced second traffic type.

For this reason, the processing capability #3 may indicate the capability to support at least one of out-of-order HARQ satisfying a certain condition and out-of-order scheduling satisfying a certain condition.

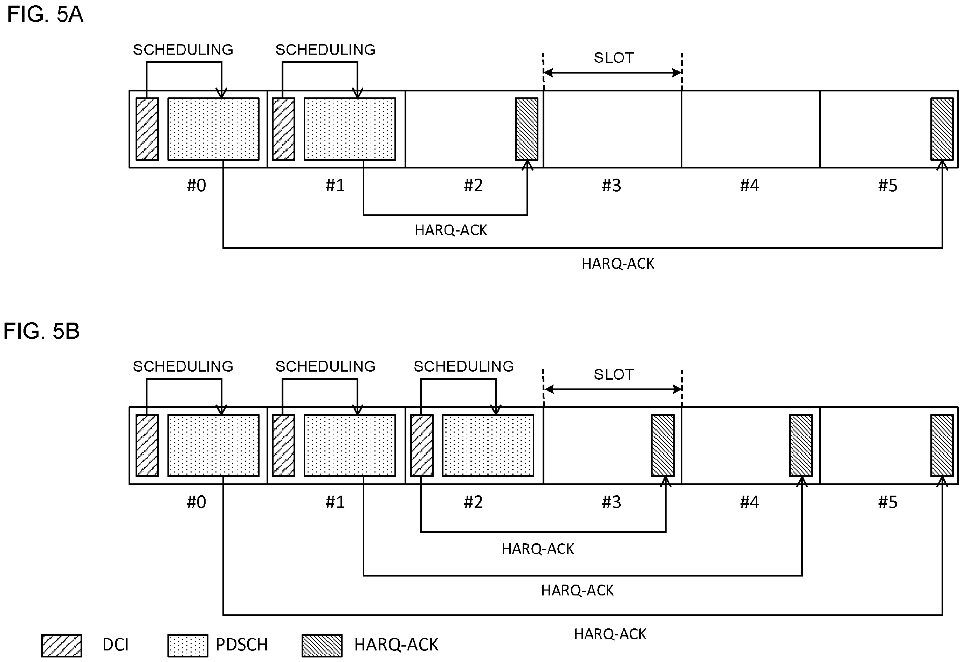

FIGS. 5A and 5B are diagrams to show examples of out-of-order HARQ. FIG. 5A shows an example of out-of-order HARQ of up to two loops. FIG. 5B shows an example of out-of-order HARQ of more than two loops. Here, the loop of out-of-order HARQ is a procedure that a base station transmits a PDSCH, a UE receives this PDSCH and transmits HARQ-ACK feedback, and the base station receives this HARQ feedback.

The processing capability #3 may support the out-of-order HARQ of up to two loops, as shown in FIG. 5A, and may not support the out-of-order HARQ of more than two loops, as shown in FIG. 5B.

Alternatively, the processing capability #3 may support both of the out-of-order HARQ of up to two loops, as shown in FIG. 5A, and the out-of-order HARQ of more than two loops, as shown in FIG. 5B.

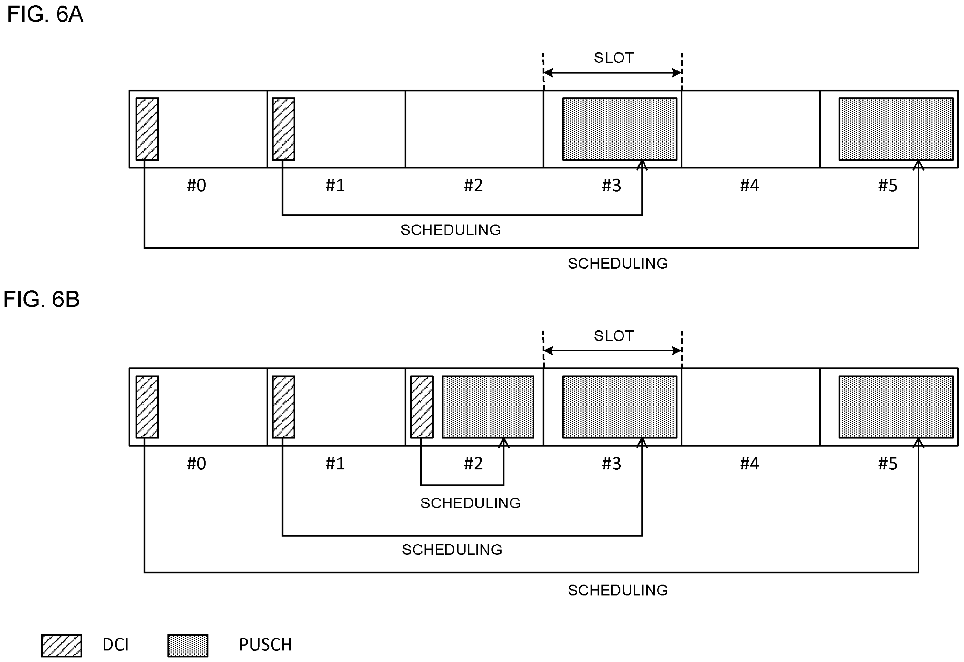

FIGS. 6A and 6B are diagrams to show examples of out-of-order scheduling. FIG. 6A shows an example of out-of-order scheduling of up to two loops. FIG. 6B shows an example of out-of-order scheduling of more than two loops. Here, the loop of out-of-order scheduling is a procedure that a base station transmits DCI, a UE receives this DCI and transmits a PUSCH based on the DCI, and the base station receives this PUSCH.

The processing capability #3 may support the out-of-order scheduling of up to two loops, as shown in FIG. 6A, and may not support the out-of-order scheduling of more than two loops, as shown in FIG. 6B.

Alternatively, the processing capability #3 may support both of the out-of-order scheduling of up to two loops, as shown in FIG. 6A, and the out-of-order scheduling of more than two loops, as shown in FIG. 6B.

In the second aspect, at least one of the out-of-order HARQ and the out-of-order scheduling that are supported by the processing capability #3 may be accepted between different traffic types (for example, first and second traffic types (such as eMBB and URLLC)). In other words, at least one of the out-of-order HARQ and the out-of-order scheduling that are supported by the processing capability #3 may not be accepted between the same traffic types.

In one example, in FIG. 5A, the outer loop (for example, the DCI and the PDSCH at the slot #0 and the HARQ-ACK at the slot #5) may be of a first traffic type (for example, eMBB). On the other hand, the inner loop (for example, the DCI and the PDSCH at the slot #1 and the HARQ-ACK at the slot #2) may be of a second traffic type (for example, URLLC) having requirements for reliability and delay stricter than those of the first traffic type. The same is applied to the out-of-order scheduling shown in FIG. 6A.

In FIG. 5B, the loop from the outer loop by a certain number (for example, the DCI and the PDSCH at the slot #0 and the HARQ-ACK at the slot #5) may be of a first traffic type (for example, eMBB). On the other hand, the rest of the loops, that is, the inner loops (for example, the DCI and the PDSCHs at the slots #1 and #2 and the HARQ-ACK at the slots #3 and #4) may be of a second traffic type (for example, URLLC) having requirements for reliability and delay stricter than those of the first traffic type. The same is applied to the out-of-order scheduling shown in FIG. 6B.

Note that the traffic type may not be recognized by a lower layer (for example, physical layer) but may be recognized by other parameter. For example, difference of the traffic types may be recognized by at least one of the following parameters.
- A plurality of logical channels (for example, UL-SCHs (Uplink Shared Channels)) having different priorities
- A plurality of tables (for example, MCS index tables) in which configured values relating to modulation and coding scheme (MCS) differ from each other
- A plurality of formats (DCI formats) having different DCI
- A plurality of different radio network temporary identifiers (RNTIs) (for example, first RNTI (C-RNTI (Cell-RNTI) and the like), second RNTI (MCS-C-RNTI), and so on) that are used in CRC scrambling of DCI
- Value indicated by an upper layer parameter
- A plurality of search spaces
- A plurality of values indicated by a certain field (for example, a new field or an existing field) in DCI

Note that CRC scrambling is to scramble (mask) cyclic redundancy check (CRC) bits, which are included (added) in DCI, by certain information (for example, RNTI).

The second aspect as described above achieves the processing capability #3 (third processing capability) that supports a function not supported by the processing capabilities #1 and #2.

### (Third Aspect)

The third aspect describes enabling of a processing capability #3. A UE may report (transmit) information indicating the processing capability #3, as UE capability information (UE capability). In this case, the UE may perform the following first or second enabling operation.

### <First Enabling Operation>

After the UE reports information indicating a processing capability #3 and then receives information indicating enabling of the processing capability #3, the UE may perform certain processing (for example, at least one of processing based on the value described in First Aspect and processing based on the function described in Second Aspect), based on the processing capability #3 (the UE may commit to operating under the condition defined by the processing capability #3).

Here, the information indicating enabling of the processing capability #3 may be a certain higher layer parameter (for example, an RRC parameter).

On the other hand, , after the UE reports information indicating a processing capability #3 but fails to receive information indicating enabling of the processing capability #3, the UE may not perform certain processing (for example, at least one of processing based on the value described in First Aspect and processing based on the function described in Second Aspect) based on the processing capability #3 (the UE may not commit to operating under the condition defined by the processing capability #3) .

For example, the UE may drop or may not expect at least one of out-of-order HARQ and out-of-order scheduling. Here, the term "drop" may represent, for example, not performing processing of an inner loop in out-of-order HARQ and in out-of-order scheduling.

The first enabling operation controls enabling of the processing capability #3 on a network side in consideration of such as use efficiency of resources of the whole system, even in a case that a UE supports the processing capability #3. Thus, it is possible to balance sufficiency of requirements (for example, requirements of URLLC) and efficiency of the whole system.

### <Second Enabling Operation>

After the UE reports information indicating a processing capability #3, the UE may perform certain processing (for example, at least one of processing based on the value described in First Aspect and processing based on the function described in Second Aspect) immediately (at any time), based on the processing capability #3.

In this case, the UE may commit to operating under the condition defined by the processing capability #3 irrespective of whether the UE receives information indicating enabling of the processing capability #3.

Note that the UE may control whether to apply the processing capability #3, based on a certain condition. Specifically, the UE may control whether to apply the processing capability #3, based on whether the transmission is the initial transmission (whether the transmission is initial transmission or retransmission).

For example, in the case of the initial transmission, it is presumed that the UE will receive data (transport block (TB)) with a relatively large payload size in a relatively wide bandwidth. In view of this, the UE may apply a processing capability (for example, processing capability #1) in which a requirement for capacity is stricter than the processing capability #3. In this case, the UE may not support at least one of out-of-order HARQ and out-of-order scheduling.

On the other hand, in the case of retransmission, it is presumed that the UE will receive data (one or more code block groups (CBGs) obtained by dividing a TB) with a small payload size in a narrow bandwidth, compared with the case of the initial transmission. In view of this, the UE may apply a processing capability (for example, processing capability #3) in which a requirement for capacity is more moderate and requirements for reliability and delay are stricter than those of the processing capability #3. In this case, the UE may support at least one of out-of-order HARQ and out-of-order scheduling.

According to the second enabling operation, the UE commits to operating based on the condition defined by the processing capability #3, upon reporting of supporting the processing capability #3. This avoids complicated processing due to control of the processing capability in the UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

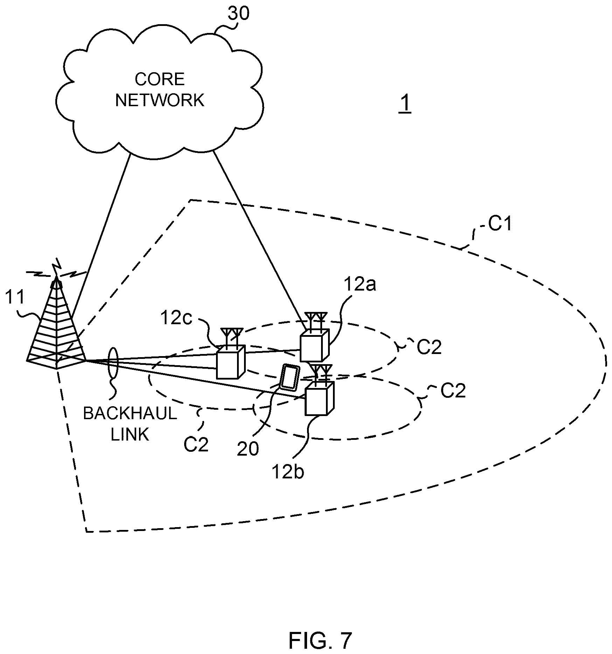

FIG. 7 is a diagram to show an example of a schematic structure of the radio communication system according to one embodiment. The radio communication system 1 may be a system implementing a communication using LTE (Long Term Evolution), 5G NR (5th generation mobile communication system New Radio) and so on the specifications of which have been drafted by 3GPP (Third Generation Partnership Project).

The radio communication system 1 may support dual connectivity (multi-RAT dual connectivity (MR-DC)) between a plurality of RATs (Radio Access Technologies). The MR-DC may include dual connectivity (EN-DC (E-UTRA-NR Dual Connectivity)) between LTE (E-UTRA (Evolved Universal Terrestrial Radio Access)) and NR, dual connectivity (NE-DC (NR-E-UTRA Dual Connectivity)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NN-DC (NR-NR Dual Connectivity)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (FR1 (Frequency Range 1)) and a second frequency band (FR2 (Frequency Range 2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the CPRI (Common Public Radio Interface), the X2 interface and so on) or a wireless connection (for example, an NR communication). For example, if an NR communication is used as a backhaul between the base stations 11 and 12, the base station 11 corresponding to a higher station may be referred to as an "IAB (Integrated Access Backhaul) donor," and the base station 12 corresponding to a relay station (relay) may be referred to as an "IAB node."

The base station 10 may be connected to a core network 30 through another base station 10 or directly. For example, the core network 30 may include at least one of EPC (Evolved Packet Core), 5GCN (5G Core Network), NGC (Next Generation Core), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), CP-OFDM (Cyclic Prefix OFDM), DFT-s-OFDM (Discrete Fourier Transform Spread OFDM), OFDMA (Orthogonal Frequency Division Multiple Access), SC-FDMA (Single Carrier Frequency Division Multiple Access), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (PDSCH (Physical Downlink Shared Channel), which is used by each user terminal 20 on a shared basis, a broadcast channel (PBCH (Physical Broadcast Channel)), a downlink control channel (PDCCH (Physical Downlink Control Channel)) and so on, may be used as downlink channels.

In the radio communication system 1, an uplink shared channel (PUSCH (Physical Uplink Shared Channel), which is used by each user terminal 20 on a shared basis, an uplink control channel (PUCCH (Physical Uplink Control Channel)), a random access channel (PRACH (Physical Random Access Channel)) and so on may be used as uplink channels.

User data, higher layer control information, SIBs (System Information Blocks) and so on are communicated on the PDSCH. User data, higher layer control information and so on may be communicated on the PUSCH. The MIBs (Master Information Blocks) may be communicated on the PBCH.

Lower layer control information is communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One SS may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Transmission confirmation information (for example, which may be also referred to as HARQ-ACK (Hybrid Automatic Repeat reQuest), ACK/NACK, and so on) of channel state information (CSI), scheduling request (SR), and so on may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on are communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SSB (SS Block)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

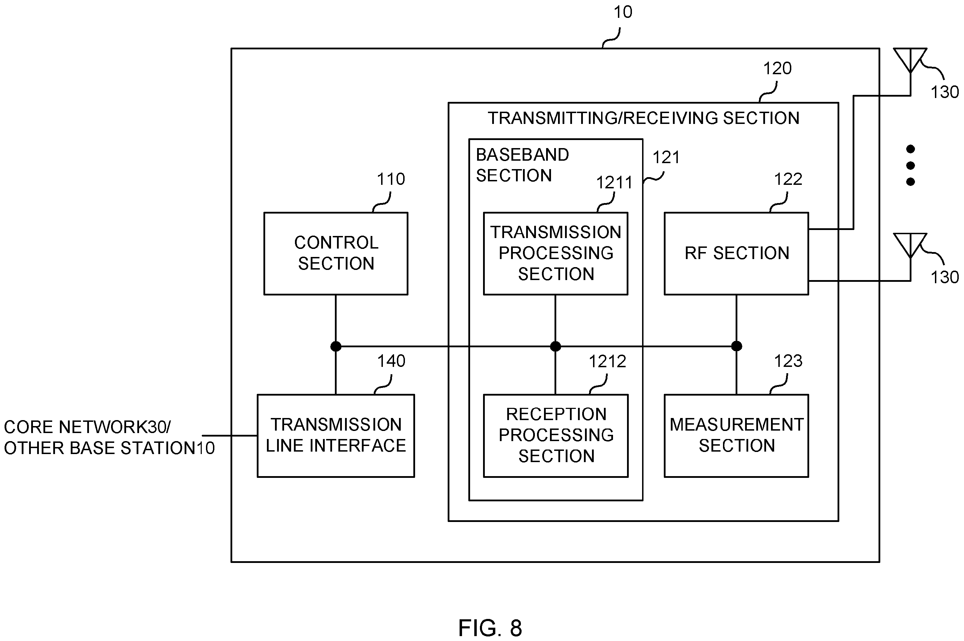

FIG. 8 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, an RF (Radio Frequency) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam foaming (for example, precoding), analog beam foaming (for example, phase rotation), and so on.

The transmitting/receiving section 120 (transmission processing section 1211) may perform the processing of the PDCP (Packet Data Convergence Protocol) layer, the processing of the RLC (Radio Link Control) layer (for example, RLC retransmission control), the processing of the MAC (Medium Access Control) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform RRM (Radio Resource Management) measurement, CSI (Channel State Information) measurement, and so on, based on the received signal. The measurement section 123 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 receives an uplink signal (for example, uplink control channel, uplink shared channel, DMRS, and CSI). The transmitting/receiving section 120 transmits a downlink signal (for example, downlink control channel, downlink shared channel, DMRS, downlink control information, and higher layer parameter).

The transmitting/receiving section 120 may receive information indicating a third processing capability that supports at least one of a value that satisfies a requirement stricter than at least one of first and second processing capabilities, and a function that is not supported by the first and second processing capabilities. The transmitting/receiving section 120 may transmit information indicating enabling of the third processing capability.

The control section 110 may control communication with the user terminal 20, based on information indicating the processing capability, which is reported by the user terminal 20. Specifically, the control section 110 may control certain processing, based on the third processing capability.

### (User Terminal)

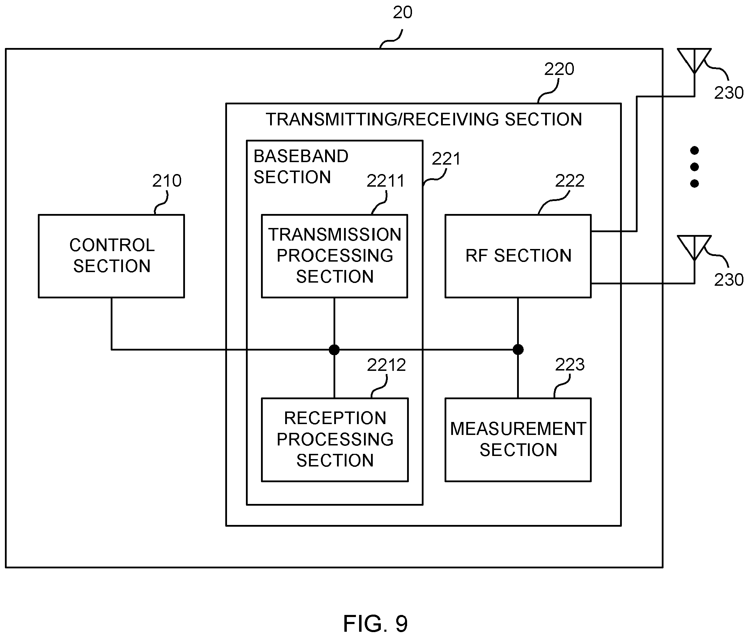

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam foaming (for example, precoding), analog beam foaming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 transmits an uplink signal (for example, uplink control channel, uplink shared channel, DMRS, and CSI). The transmitting/receiving section 220 receives a downlink signal (for example, downlink control channel, downlink shared channel, DMRS, downlink control information, and higher layer parameter).

The transmitting/receiving section 220 may transmit information indicating a third processing capability that supports at least one of a value that satisfies a requirement stricter than first and second processing capabilities, and a function that is not supported by the first and second processing capabilities. The transmitting/receiving section 120 may receive information indicating enabling of the third processing capability.

The control section 210 may control certain processing, based on the processing capability supported by the user terminal 20 (for example, third processing capability).

Here, the third processing capability may support a value that satisfies a requirement stricter than at least one of the first and second processing capabilities, with respect to at least one of a processing time of a downlink shared channel, a preparation time of an uplink shared channel, a computation time of channel state information, the number of monitored downlink control channel candidates per slot and per cell, the number of non-overlapped control channel elements per slot and per cell, the numbers of schedulable downlink shared channels and uplink shared channels per slot and per cell, and the number of pieces of downlink control information for scheduling a downlink shared channel or an uplink shared channel, which are storable per cell (first aspect).

In a case that a first downlink shared channel is received in a first time unit, and initial transmission confirmation information with respect to the first downlink shared channel is transmitted in a second time unit, the third processing capability may support, under a certain condition, a function of receiving a second downlink shared channel in a third time unit after the first time unit and transmitting second transmission confirmation information with respect to the second downlink shared channel in a fourth time unit before the second time unit (second aspect).

In one example, a first downlink control channel is received in a first time unit, and a first uplink shared channel corresponding to the first downlink control channel is transmitted in a second time unit. In this case, the third processing capability may support, under a certain condition, a function of receiving a second downlink control channel in a third time unit after the first time unit and transmitting a second uplink shared channel corresponding to the second downlink control channel in a fourth time unit before the second time unit (second aspect).

These functions may be accepted between different traffic types (second aspect).

The control section 210 may control certain processing, based on the third processing capability in a case that the third processing capability is enabled (third aspect). The control section 210 may control certain processing, based on the third processing capability irrespective of whether the third processing capability is enabled.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

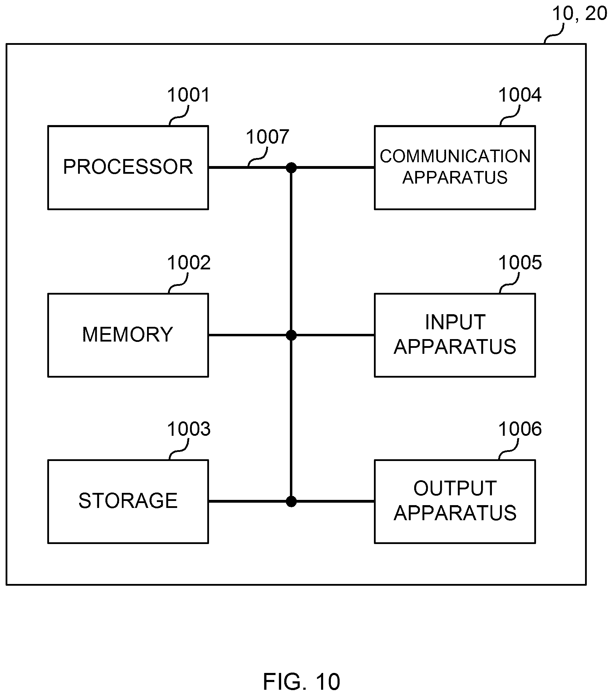

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably. The "network" may mean an apparatus (for example, a base station) included in the network.

In the present disclosure, the terms such as "precoding," a "precoder," a "weight (precoding weight)," "quasi-co-location (QCL)," a "TCI state (Transmission Configuration Indication state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a transmitting section that transmits information indicating a third processing capability, the third processing capability supporting at least one of a value that satisfies a requirement stricter than at least one of first and second processing capabilities, and a function that is not supported by the first and second processing capabilities; and
a control section that controls certain processing based on the third processing capability.

2. The user terminal according to claim 1, wherein
the third processing capability supports the value that satisfies the requirement stricter than at least one of the first and second processing capabilities, with respect to at least one of a processing time of a downlink shared channel, a preparation time of an uplink shared channel, a computation time of channel state information, the number of monitored downlink control channel candidates per slot and per cell, the number of non-overlapped control channel elements per slot and per cell, the numbers of schedulable downlink shared channels and uplink shared channels per slot and per cell, and the number of pieces of downlink control information for scheduling a downlink shared channel or an uplink shared channel, which are storable per cell.

3. The user terminal according to claim 1 or 2, wherein
in a case that a first downlink shared channel is received in a first time unit, and initial transmission confirmation information with respect to the first downlink shared channel is transmitted in a second time unit, the third processing capability supports, under a certain condition, a function of receiving a second downlink shared channel in a third time unit after the first time unit and transmitting second transmission confirmation information with respect to the second downlink shared channel in a fourth time unit before the second time unit.

4. The user terminal according to any one of claims 1 to 3, wherein
in a case that a first downlink control channel is received in a first time unit, and a first uplink shared channel corresponding to the first downlink control channel is transmitted in a second time unit, the third processing capability supports, under a certain condition, a function of receiving a second downlink control channel in a third time unit after the first time unit and transmitting a second uplink shared channel corresponding to the second downlink control channel in a fourth time unit before the second time unit.

5. The user terminal according to claim 3 or 4, wherein
the function is accepted between different traffic types.

6. The user terminal according to any one of claims 1 to 5, further comprising
a receiving section that receives information indicating enabling of the third processing capability, wherein
the control section controls the certain processing based on the third processing capability in a case that the third processing information is enabled based on the information.
